(19) Europäisches Patentamt
European Patent Office
Office européen des brevets

(11) Publication number: **0 404 254 A1**

(12) # EUROPEAN PATENT APPLICATION

(21) Application number: **90201587.4**

(22) Date of filing: **19.06.90**

(51) Int. Cl.[5]: **C08G 69/16, C08G 69/14, C07D 227/087, C08G 69/40, C08G 18/80**

(30) Priority: **22.06.89 NL 8901570**

(43) Date of publication of application: **27.12.90 Bulletin 90/52**

(84) Designated Contracting States: **AT BE CH DE DK ES FR GB IT LI NL SE**

(71) Applicant: **STAMICARBON B.V.**
**Mijnweg 1**
**NL-6167 AC Geleen(NL)**

(72) Inventor: **Vriesema, Bindert Klaas**
**Burg. Luytenstraat 47**
**NL-6151 GE Sittard(NL)**
Inventor: **Van Geenen, Albert Arnold**
**Merkelbeekerstraat 82**
**NL-6441 KM Brunssum(NL)**
Inventor: **Lange, Ronald Frans Maria**
**Steenstraat 13**
**NL-6051 EP Maasbracht(NL)**
Inventor: **Shröder, Christiaan**
**Rozenhoek 17**
**NL-6129 KK Setom (L.)(NL)**

(54) **N-substituted carbamoyllactam functional compounds and polylactam block copolymers derived therefrom.**

(57) Disclosed are conversion products of N-substituted carbamoyllactam functional compounds characterized by the general formula:

$$P - [ - A - (-L-)_y - \overset{O}{\overset{\|}{C}} - \overset{H}{\overset{|}{N}} - R - [- \overset{H}{\overset{|}{N}} - \overset{O}{\overset{\|}{C}} - (-L)]_a ]_x$$

where:
A represents an oxygen atom or an NH group;
R represents an alkyl, aralkyl, alkaryl or aryl group, where alkyl and alkyl bound in aralkyl or alkaryl may also be cycloalkyl;
P represents a residue of a compound $P(AH)_x$ with a number average molecular weight of at least 150, with one or more OH or $NH_2$ groups, $P(AH)_x$ being a liquid crystalline compound or a compound with liquid crystalline segments in the main chain and/or the side chain, or a compound which forms with lactam-blocked polyisocyanate a compound with liquid crystalline properties;
(-L-) represents an opened lactam ring;
(-L) represents a non-opened lactam ring;
x is a whole number higher than or equal to 1;
y is equal to 0 or 1; and
a is a whole number higher than or equal to 1.

Further, the present invention relates to polylactam block copolymers obtained by lactam polymerization at a lactam group.

EP 0 404 254 A1

# N-SUBSTITUTED CARBAMOYLLACTAM FUNCTIONAL COMPOUNDS AND POLYLACTAM BLOCK COPOLYMERS DERIVED THEREFROM

## BACKGROUND OF THE INVENTION

### Field of the Invention

The present invention relates to N-substituted carbamoyllactam functional compounds, to polylactam block copolymers derived therefrom through lactam polymerization at a lactam group and to the application of such block copolymers in polyamide mixtures.

### Description of the Related Art

N-substituted carbamoyllactam functional compounds are described in EP-A-134616. Such products can be obtained according to the conventional methods described in EP-A-135233 by the conversion of lactam blocked polyisocyanates with polyols, preferably polyether polyols, polyester polyols and polybutadiene polyols. EP-A-134616 discloses that the conversion products are most suitable for use as an activator or accelerator in the preparation of nylon block copolymers, in particular in the so-called RIM or RRIM systems, which require a fast polymerization reaction. Such nylon block copolymers contain blocks of a polyamide.

Polyamides generally are polycondensates of primarily aliphatic dicarboxylic acids with 4-12 carbon atoms, with mostly aliphatic diamines with 4-14 carbon atoms, and/or of lactams with 6-12 carbon atoms. Examples of polyamides include: polyhexamethylene adipamide (nylon 6,6), polyhexamethylene azelamide (nylon 6,9), polyhexamethylene sebacamide (nylon 6,10), polyhexamethylene auramide (nylon 6,12), polytetramethylene adipamide (nylon 4,6), polycaprolactam (nylon 6) and polyaurinolactam (nylon 12). The dicarboxylic acids and/or the diamines may also be aromatic.

Polyamides can also be produced from one or more dicarboxylic acids and/or two or more diamines, or from two or more lactams; they can also consist of mixtures of two or more polyamides.

Polyamides have numerous applications. For certain of these, it is often desirable to modify the properties of the polyamides. Modification of properties is often achieved through synthesis of block copolymers, consisting of one or more polyamide blocks and one or more blocks of a different polymer. Thus, for example, it is known that hydrophobic blocks in polycaprolactam can reduce its often undesirable hydrophilic character. Polylactam/polyether block copolymers thus possess a combination of properties which make them well suited for application as engineering plastics.

## SUMMARY OF THE INVENTION

It is an object of the present invention to provide N-substituted carbamoyllactam functional compounds.

It is a further object of the present invention to provide from these N-substituted carbamoyllactam functional compounds block copolymers possessing both excellent tensile stength and chemical and heat resistance.

Accordingly, the present invention provides compounds of the following formula:

$$P - [ - A - (-L-)_y - \overset{\overset{\displaystyle O}{\|}}{C} - \overset{\overset{\displaystyle H}{|}}{N} - R - [- \overset{\overset{\displaystyle H}{|}}{N} - \overset{\overset{\displaystyle O}{\|}}{C} - (-L)]_a ]_x \qquad (I)$$

where:
A represents an oxygen atom or an -NH- group;
R represents an alkyl, aralkyl, alkaryl or aryl group, where alkyl and alkyl bound in aralkyl or alkaryl may

also be cycloalkyl;
P represents a residue of a compound $P(AH)_x$ with a number average molecular weight of at least 150, with one or more OH or $NH_2$ groups, $P(AH)_x$ being a liquid crystalline compound or a compound with liquid crystalline segments in the main chain and/or the side chains, or a compound which forms with lactam-blocked polyisocyanate a compound with liquid crystalline properties;
(-L-) represents an opened lactam ring;
(-L) represents a non-opened lactam ring;
x is a whole number higher than or equal to 1;
y is equal to 0 or 1; and
a is a whole number higher than or equal to 1.

Also provided is a process for the lactam polymerization of the aforementioned compounds at the terminal lactam group to form polyamide block copolymers.

The compounds of the present invention are most suitable for use as accelerators in the preparation of nylon block copolymers, and in particular provide block copolymers with improved stiffness.

## DESCRIPTION OF THE PREFERRED EMBODIMENTS

The various components comprising the N-substituted carbamoyllactam functional compounds and the method of preparation therefor of the present invention will be described hereinbelow.

Compounds of the aforementioned general formula (I) can be prepared by reacting a polymer containing one or more -OH or $-NH_2$ groups with a lactam blocked polyisocyanate at an elevated temperature of at least 80 °C, and preferably at a temperature of between 90 °C and 250 °C, in the presence of a catalyst. The catalyst may be either an alkali metal lactamate, such as sodium or potassium lactamate, or a Lewis acid, such as magnesium stearate, magnesium chloride, or zinc acetylacetonate. The reaction temperature chosen should be lower than the temperature at which decomposition products are formed. It is preferable that the temperature be no higher than approximately 250 °C. The conversion is carried out in molten lactam, in a solvent or a dispersion agent in which the polymer may either be dissolved, partly dissolved or not dissolved. Alternatively, the conversion may be effected in the mass, i.e. without a solvent, dispersion agent, or molten lactam. The molar ratio between catalyst and lactam-blocked polyisocyanate may be from 0.01 to 10, and preferably is from 0.5 to 5.
The molar ratio between lactam-blocked polyisocyanate and OH or $NH_2$ groups of the polymer $P(AH)_x$ may be from 10 to 0.5, and preferably is from 5 to 1, with particular preference given to a ratio of 1 : 1.

The term "lactam-blocked polyisocyanate" as used herein denotes reaction products of a polyisocyanate and a lactam, and in particular a polyisocyanate and caprolactam. Lactam-blocked polyisocyanates are produced in accordance with the following reaction:

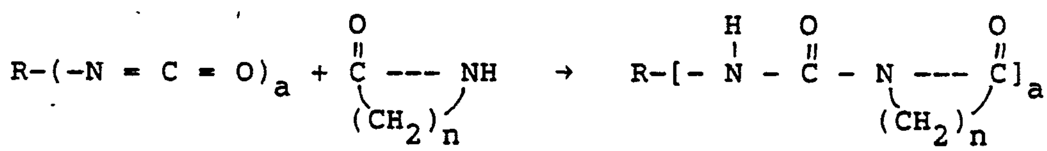

where R has the meanings defined above and n is a whole number equal to 3-11, preferably 5.

Liquid crystalline polymers utilized in the present invention contain at least one or more aromatic units, including, for example units with an oxy and a carboxyl group; units with two oxy groups, and units with two carboxyl groups.

In general, a unit with an oxy and a carboxyl group has the formula

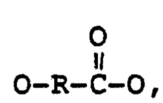

with R containing at least one aromatic ring. Examples include:

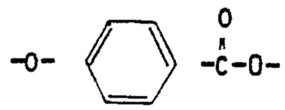

(IIa)

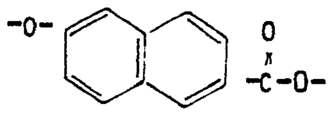

(IIb)

The liquid crystalline polymer preferably contains units of the formula (IIa). These units are derived from hydroxybenzoic acid or its derivatives. Either the para- or the meta-substituted unit may be used. Preferably, the unit (IIa) is para-substituted. In the aromatic ring one or more of the hydrogen atoms may have been substituted with an alkyl or alkoxy group with one to four carbon atoms; by a halogen, such as chlorine, bromine, or fluorine; and/or by a phenyl group, which may also be substituted.

Units with two oxy groups in general have the formula O-R-O. Examples include:

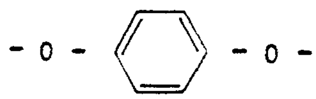

(IIIa)

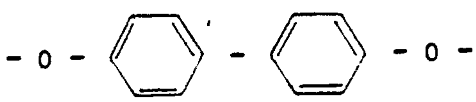

(IIIb)

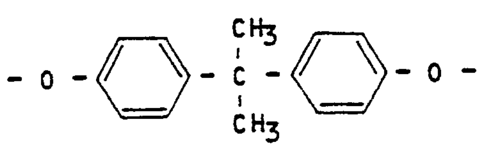

(IIIc)

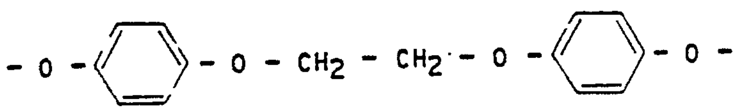

(IIId)

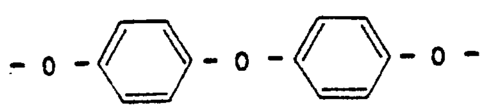

(IIIe)

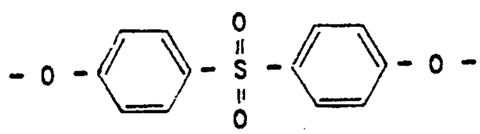

(IIIf)

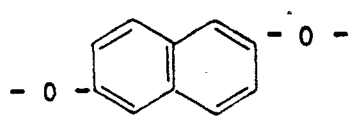

(IIIg)

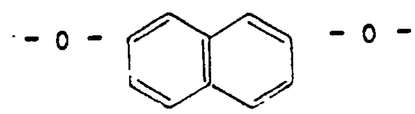

(IIIh)

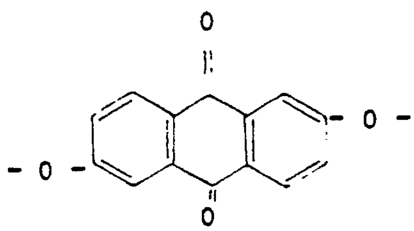

(IIIi)

The liquid crystalline polymer may also contain mixtures of the above-mentioned units or dioxyalkanes, such as ethylene glycol, neopentyl glycol, or 1,4-butane diol. The prepolymer preferably contains dioxyphenyl (IIIa) and/or biphenoxy (IIIb) groups, and in particular contains a biphenoxy group of the formula (IIIb). This preferred compound can be derived from p,p′-biphenol. In the aromatic rings one or more hydrogen atoms may be substituted with an alkyl and/or alkoxy group, a halogen and/or a phenyl group, which in itself may also be substituted.

The aromatic units with two carboxyl groups can be obtained from aromatic dicarboxylic acids or the corresponding esters, such as terephthalic acid, isophthalic acid, 2,6-naphthalene dicarboxylic acid, 2,7-naphthalene dicarboxylic acid, dibenzoic acid, 4,4′-dicarboxyl diphenyl sulphone, 4,4′-dicarboxy diphenyl ethane, 4,4′-dicarboxy diphenyl sulphide, 4,4′-dicarboxy diphenyl ether, 4,4′-dicarboxy diphenyl methane, 4,4′-dicarboxy diphenoxy ethane, 2,2-bis(4-carboxyphenyl)propane.

The aromatic units with two carboxyl groups are preferably obtained from terephthalic acid, isophthalic acid, and/or derivatives thereof. In the aromatic ring, one or more hydrogen atoms may be substituted with an alkyl and/or alkoxy group, a halogen, and/or a phenyl group. The phenyl group may also be substituted. The units with two carboxyl groups are preferably obtained from unsubstituted terephthalic acid and/or isophthalic acid.

Liquid crystalline polymers with the liquid crystalline segment in a side chain of the polymer may also be utilized in the present invention. Such liquid crystalline polymers are described in A. Ciferri et al., Polymer Liquid Crystals, Academic Press 1982, ch. 2, pp. 35-40.

Compounds with liquid crystalline segments in the main chain and/or side chain include polymers such as polyols, polyester polyols, and polybutadiene polyols. Also included are siloxane-containing polyols with liquid crystalline segments, such as:

HO - polyol - LCP - polyol - OH

or

HO - LCP - polyol - LCP - OH etc.

The abbreviation "LCP" as used herein denotes the liquid crystalline segment. LCP polyols with liquid crystalline segments in the side chain may also be used.

Examples of polyols include compounds of the general formula:

$R_2$ - $(OH)_x$

where x is a number equal to or greater than 2, and is preferably from 2 to 4.

The $R_2$ group in the formula $R_2$ - $(OH)_x$ may represent either a hydrocarbon (preferably with a molecular weight of at least 28 and more particularly ranging from 28 to 15000), a polyether, or a polysiloxane group.

The term "molecular weight" of polymers or polymer segmentsas used herein denotes the number average molecular weight, and is determined with known techniques such as gel phase chromatography. The therms "polysiloxane groups" or "polysiloxane segments" as used herein denote groups or segments

which contain at least 50 per cent by weight of one or more units of the following formula:

$$-(-\overset{\displaystyle R_4}{\underset{\displaystyle R_3}{\overset{|}{\underset{|}{Si}}}}-O-)-$$

in which
$R_3$ represents alkyl, aryl, cycloalkyl, alkaryl and/or aralkyl, and
$R_4$ represents alkyl, aryl, cycloalkyl, alkaryl and/or aralkyl.

Polysiloxane groups or segments may contain additional groups, such as ether groups with lower alkyls including ethane or methane. Such ether groups are often terminal groups at the repetitive siloxane units. These ether groups may constitute up to 50 per cent by weight of the polysiloxane group, but are preferably limited to less than 30 per cent by weight. Preferably, however, $R_2$ is a hydrocarbon group or a polyether group. Examples of hydrocarbon groups are alkylene groups in the case of diols, such as ethylene glycol or polymer hydrocarbons. The polymeric hydrocarbon may be segments of polybutadiene containing two or more hydroxyl groups. A polyoxypropylene segment containing two or more hydroxyl groups is an example of a polyether group. Examples of hydroxyl group-containing compounds that may be employed in the above-mentioned process include ethylene glycol, propylene glycol, poly(oxybutylene)-glycol, poly(oxyethylene)glycol, poly(oxypropylene)triol, poly(oxypropylene)tetrol, polybutadiene diol, polydimethyl siloxanes that contain hydroxyl groups, and combinations thereof. For example, a combination might include block polymers of poly(oxypropylene) and poly(oxyethylene) containing hydroxyl groups.

Compounds of the general formula $P(AH)_x$, may also be used, which after conversion with N-substituted carbamoyllactam provide compounds of the general formula (I), which possess liquid crystalline properties.

The polyamines used in the present invention include those with at least two amine groups and are preferably chosen from the group comprising polyoxyalkylene polyamines, polyalkadiene polyamines, polyalkene polyamines, and combinations thereof.

The polyamine has an average molecular weight of from 300 to 10,000 and is, preferably at least 500. An average molecular weight of at least 1,000 is desirable, and is chosen such that the polyamine provides the elastomer segment in the polyamide, while the lactam polymerization provides the hard crystalline segment in the polyamide.

The elastomer segments produce a glass transition temperature Tg which is less than 0°C, and is preferably less than -25°C, as soon as they are incorporated into the nylon block copolymer. The glass transition temperature is determined by means of differential scanning calorimetry under nitrogen at a scanning rate of 10-20°C per minute. The quantity of elastomer segments in the nylon block copolymer may be from 10 to 90 per cent by weight, and is determined according to the product properties which are desired.

Examples of suitable polymer hydrocarbon polyamines include polybutadiene diamine, polybutadiene polyamines, and butadiene acrylonitrile polyamines. Examples of suitable polyether polyamines include poly(oxybutylene)diamine, poly(oxyethylene)diamine, poly(oxypropylene)diamine, poly(oxypropylene)-triamine, poly(oxypropylene)tetramine, and combinations thereof such as for instance block copolymers of poly(oxypropylene) and poly(oxyethylene) with at least two functional amine groups. It is preferable that the polyether polyamines be poly(oxypropylene)triamines with an average molecular weight of at least 2,000.

N-substituted carbamoyllactams can be prepared from a polyisocyanate and a lactam. Suitable polyisocyanates for use in the present invention are those polyisocyanates described in EP-A-134616.

Next, the N-substituted carbamoyllactam is reacted as described in the foregoing with a polymer containing OH or $NH_2$ groups as defined above. It is also possible to prepare compounds of the general formula (I) by reacting a polymer with one or more OH or $NH_2$ groups at an elevated temperature of at least 80°C, preferably at a temperature of from 90°C to 250°C, with a polyisocyanate and then with a lactam. The product of the general formula (I) is then polymerized in the presence of a lactam polymerization catalyst in either molten lactam, a suitable dispersion agent, or in the mass into a polyamide block copolymer of the general formula:

$$P-[-A-(-L-)_y-\overset{O}{\overset{\|}{C}}-\overset{H}{\overset{|}{N}}-R-[-\overset{H}{\overset{|}{N}}-\overset{O}{\overset{\|}{C}}-L-PL]_a]_x$$

The symbols A, R, P, -L-, x, a and y have the meanings defined in the foregoing and PL represents a polylactam block.

If x=1 in the above formula, then two-block or AB block copolymers of the general formula

$$P - [ - A - (-L-)_y - \overset{\overset{O}{\|}}{C} - \overset{\overset{H}{|}}{N} - R - [- \overset{\overset{H}{|}}{N} - \overset{\overset{O}{\|}}{C} - L - PL]_a$$

are obtained, in which A, R, P, -L-, PL, a and y have the meanings defined in the foregoing. Such a product is most desirable where the block copolymer is to be used as a compatibilizer. In the interface between two non-compatible polymers, such AB block copolymers take an orientation such that the blocks adhere to the polymeric components with which they are compatible. Thus, both good stabilization and strong bonding of the two components are obtained.

The lactam polymerization at an N-substituted carbamoyllactam compound of the formula shown above is carried out in a conventional manner in the presence of a basic lactam polymerization catalyst. Such catalysts and polymerizations are known, and exemplary descriptions are provided in EP-A-134616 and EP-A-135233. Examples of the catalyst include sodium lactamate, potassium lactamate, and lactam magnesium bromide or chloride. A minimal amount of catalyst is sufficient. For instance, less than 1 mole-% of catalyst relative to the lactam to be polymerized is acceptable, but larger quantities, for instance up to 3 mole-%, may also be used.

The weight ratio between the lactam monomer and the N-substituted carbamoyllactam compound may vary widely but in general lie between 5 : 95 and 95 : 5, and preferably lies between 30 :70 and 70 : 30. As more lactam monomer is polymerized at the N-substituted carbamoyllactam compound, the molecular weight of the polylactam block will increase.

The polylactam block should have a number average molecular weight of at least 1000, and preferably is at least 4000. In general, the number average molecular weight will be at most 50,000. Higher molecular weights are possible, but offer no advantages. The conventional modifications of lactam polymerization to polyamide may be applied to the polyamide block polymerization of the present invention.

The lactam employed for the formation of the polyamide block is preferably the same lactam as used for the N-substituted carbamoyllactam. In particular, it is preferable that caprolactam be used both for the N-substituted carbamoyllactam and for the formation of the polyamide block. The use of a minimal amount of pyrrolidone, however, does provide for an accelerated reaction.

Compounds of the general formula (I) may be utilized in the preparation of polyurethanes containing liquid crystalline segments. These products are obtained by reacting the compounds of the general formula (I) with a polyol at elevated temperature. In this reaction polyurethane is formed, with release of the lactam. The reaction is carried out at a temperature of 125-300°C, preferably between 160 and 250°C.

It may be desirable to carry out the preparation of the polymer in the presence of one or more compounds which are often incorporated in polymers, such as fillers, plasticizers, flameproofing agents, stabilizers, impact modifiers, and reinforcing fibers such as asbestos, glass fibers or carbon fibers.

Objects wholly or partially made of the polymer composition according to the present invention possess both excellent tensile strength, and excellent chemical and heat resistance. Such desirable qualities make the polymer according to the present invention highly suitable for use in applications related to both electrical engineering and aircraft manufacturing.

The present invention is further illustrated by the following examples, without being restricted thereto.

## Example I

### Preparation of a hydroxyl functional compound

A solution of 110 g of hydroquinone and 110 g of triethylamine in 1000 ml of diethyl ether was heated to 35°C. With continuous stirring, a solution of 102 g terephthaloylchloride in 500 ml diethyl ether was added dropwise to this over a period of 3 hours. After complete addition the whole was afterreacted for 2 hours at 35°C and the mixture was then cooled to room temperature. All of these actions were carried out under a dry nitrogen atmosphere. The triethylamine hydrochloride formed was removed by extracting the mixture three times with 250 ml water. After drying with magnesium sulphate the solvent was removed by

means of rotary film evaporation.

Example II

Preparation of carbamoyllactam functional LCP compound

(Method A)

A solution of 84 g of 1,6-hexane diisocyanate and 3 drops of dibutyl tin dilaureate in 150 ml toluene was heated to 70° C. At this temperature, with continuous stirring, a solution of 87.5 g of the liquid crystalline compound, prepared as in example I, in 300 ml toluene, was added dropwise over a 3 hour period. After complete addition, the whole was afterreacted for 4 hours at 70° C. Next, 57 g of dry caprolactam was added and the mixture was (reflux) heated at about 112° C with continuous stirring. The solvent was removed at reduced pressure by means of a rotary film evaporator.

Example III

Preparation of a carbamoyllactam functional LCP compound

(Method B)

In 250 ml of toluene, 87.5 g of liquid crystalline compound (prepared as in example I) and 198 g of caprolactam-blocked 1,6-hexane diisocyanate were (reflux) heated to 115° C. After addition of 1 g dry magnesium chloride (catalyst) the whole was reacted for 8 hours at reflux temperature. Next, the solvent was removed at reduced pressure (200 mm Hg).

Example IV

Carbamoyllactam funtional polyether-LCP-polyether compound

Liquid crystalline diacid chloride:

A solution of 203 g of terephthaloyl chloride and 210 g of triethylamine in 1500 ml of diethyl ether was heated to 35° C. With constant stirring, 55 g of hydroquinone dissolved in 1000 ml of diethyl ether was added dropwise over a period of 4 hours. After complete addition, the whole was afterreacted for 2 hours and the mixture was then cooled to 5° C. All actions were carried out under a dry nitrogen atmosphere. The triethylamine hydrochloride formed was removed at this temperature by extracting the mixture three times with 500 ml of water of 5° C. After drying with magnesium sulphate the solvent was removed by means of a rotary film evaporator.

Carbamoyllactam compound:

A solution of 2000 g of PPG 2000 (polypropylene ether glycol with a mol weight of 2000 g/mol) and 107 g of triethyl amine in 2000 ml of toluene was heated to 100° C. Next, a solution of 221 g of the liquid crystalline diacid chloride in 2700 ml of toluene was added dropwise at this temperature over a period of 2 hours. After complete addition, the whole was afterreacted for 15 hours. Next, the mixture was cooled to 20° C and the triethylamine hydrochloride formed was removed by filtration on a G3 glass filter. To the filtrate were added 395 g caprolactam-blocked 1,6-hexane diisocyanate and 10 g of dry magnesium

chloride. The solvent (toluene ) was subsequently removed by distillation. The solvent-free mixture was then reacted for 4 hours by stirring at 150 ° C to form a carbamoyllactam-terminated polyether-LCP-polyether compound.

Example V

Carbamoyllactam functional LCP-polyether-LCP compound

Carbamoyllactam-terminated LCP-polyether-LCP compound was obtained by heating with constant stirring for 4 hours at 150 ° C 470 g of Caradol [(R)]36-3 (polyethertriol with a molar mass of 4700 g/mol; Shell), 275 g liquid crystalline carbamoyllactam compound (prepared as in example II), and 1 g of dry magnesiumchloride (catalyst).

Example VI

Nylon block copolymer

70 g carbamoyllactam functional prepolymer obtained as in example V, was dissolved at 100 ° C in 40 g of dry caprolactam (solution A) in an Erlenmeyer flask. In another Erlenmeyer flask, 7 g of sodium caprolactamate (1.4 molar in caprolactam) was dissolved at 100 ° C in 103 g caprolactam (solution B). Solutions A and B were then mixed well, and the mixture was poured into a sheet mould of 20x20x0.4 cm. The mold temperature was 140 ° C. The nylon sheet removed after a period of 20 minutes exhibited an E-modulus of 2000 $N/mm^2$.

**Claims**

1. N-substituted carbamoyllactam functional compounds of the formula:

$$P - [ - A - (-L-)_y - \overset{O}{\overset{\|}{C}} - \overset{H}{\overset{|}{N}} - R - [- \overset{H}{\overset{|}{N}} - \overset{O}{\overset{\|}{C}} - (-L)]_a]_x$$

where:
A represents an oxygen atom or an NH group;
R represents an alkyl, aralkyl, alkaryl or aryl group, where said alkyl and alkyl bound in aralkyl or alkaryl can be cycloalkyl;
P represents a residue of a compound $P(AH)_x$ with a number average molecular weight of at least 150, with one or more OH or $NH_2$ groups, said $P(AH)_x$ being a liquid crystalline compound, or a compound with liquid crystalline segments in the main chain, the side chain, or both, or a compound which forms with lactam-blocked polyisocyanate a compound with liquid crystalline properties;
(-L-) represents an opened lactam ring;
(-L) represents a non-opened lactam ring;
x is a whole number higher than or equal to 1;
y is equal to 0 or 1; and
a is a whole number higher than or equal to 1.

2. Polyamide block copolymers comprising both one or more polyamide blocks and a polymer block of the formula:

$$P - [ - A - (-L-)_y - \overset{O}{\overset{\|}{C}} - \overset{H}{\overset{|}{N}} - R - [- \overset{H}{\overset{|}{N}} - \overset{O}{\overset{\|}{C}} - L - PL]_a]_x$$

where:
A represents an oxygen atom or an NH group;
R represents an alkyl, aralkyl, alkaryl or aryl group, where said alkyl and alkyl bound in aralkyl or alkaryl can be cycloalkyl;
P represents a residue of a compound P(AH), with a number average molecular weight of at least 150, with one or more OH or $NH_2$ groups, said P(AH), being a liquid crystalline compound, or a compound with liquid crystalline segments in the main chain, the side chain, or both, or a compound which forms with lactam-blocked polyisocyanate a compound with liquid crystalline properties;
(-L-) represents an opened lactam ring;
PL represesent a polylactam block;
x is a whole number higher than or equal to 1 ;
y is equal to 0 or 1; and
a is a whole number higher than or equal to 1.

3. Polyamide block copolymers according to claim 2, wherein x is equal to 1.

4. A process for the preparation of N-substituted carbamoyllactam functional compounds of the formula:

$$P-[-A-(-L-)_y-\overset{O}{\overset{\|}{C}}-\overset{H}{\overset{|}{N}}-R-[-\overset{H}{\overset{|}{N}}-\overset{O}{\overset{\|}{C}}-(-L-)]_a]_x$$

where:
A represents an oxygen atom or an NH group;
R represents an alkyl, aralkyl, alkaryl or aryl group, where said alkyl and alkyl bound in aralkyl or alkaryl can be cycloalkyl;
P represents a residue of a compound P(AH) with a number average molecular weight of at least 150, with one or more oH or NH groups, said P(AH), being a liquid crystalline compound, or a compound with liquid crystalline segments in the main chain, the side chain, or both, or a compound which forms with lactam-blocked polyisocyanate a compound with liquid crystalline properties;
(-L-) represents an opened lactam ring;
(-L) represents a non-opened lactam ring;
x is a whole number higher than or equal to 1;
y is equal to 0 or 1; and
a is a whole number higher than or equal to 1;
comprising reacting said compound $P(AH)_x$ with one or more OH or $NH_2$ groups at an elevated temperature of at least 80° C with lactam-blocked polyisocyanate.

5. The process of claim 4, wherein said temperature is between 90° C and 250° C.

6. A process for the preparation of polyurethanes containing liquid crystalline segments comprising reacting compounds of the formula:

$$P-[-A-(-L-)_y-\overset{O}{\overset{\|}{C}}-\overset{H}{\overset{|}{N}}-R-[-\overset{H}{\overset{|}{N}}-\overset{O}{\overset{\|}{C}}-(-L)]_a]_x$$

where:
A represents an oxygen atom or an NH group;
R represents an alkyl, aralkyl, alkaryl or aryl group, where said alkyl and alkyl bound in aralkyl or alkaryl can be cycloalkyl;
P represents a residue of a compound P(AH) with a number average molecular weight of at least 150, with one or more oH or NH groups, said P(AH), being a liquid crystalline compound, or a compound with liquid crystalline segments in the main chain, the side chain, or both, or a compound which forms with lactam-blocked polyisocyanate a compound with liquid crystalline properties;
(-L-) represents an opened lactam ring;
(-L) represents a non-opened lactam ring;
x is a whole number higher than or equal to 1;
y is equal to 0 or 1; and
a is a whole number higher than or equal to 1;
with a polyol at a temperature of from 125° C to 300° C.

7. The process of claim 6, wherein said temperature is between 160 °C and 250 °C.

European Patent Office

# EUROPEAN SEARCH REPORT

Application Number

EP 90 20 1587

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | EP-A-0 134 616 (STAMICARBON)<br>--- | | C 08 G 69/16<br>C 08 G 69/14<br>C 07 D 227/087<br>C 08 G 69/40<br>C 08 G 18/80 |
| D,A | EP-A-0 135 233 (STAMICARBON)<br>----- | | |
| | | | TECHNICAL FIELDS SEARCHED (Int. Cl.5) |
| | | | C 08 G<br>C 07 D |

The present search report has been drawn up for all claims

| Place of search | Date of completion of the search | Examiner |
|---|---|---|
| THE HAGUE | 01-10-1990 | LEROY ALAIN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)